# EUROPÄISCHE PATENTSCHRIFT

(11) **EP 1 272 587 B1**
(45) Veröffentlichungstag und Bekanntmachung des Hinweises auf die Patenterteilung: **19.05.2004**
(21) Anmeldenummer: 01983264.1
(22) Anmeldetag: 31.03.2001
(51) Int. Cl.: C09J 163/00, C08G 73/10, C09J 5/06, C09J 151/04, C08G 59/00, C08L 63/00

(54) **SCHLAGFESTE EPOXIDHARZ-ZUSAMMENSETZUNGEN**
IMPACT-RESISTANT EPOXY RESIN COMPOSITIONS
COMPOSITIONS DE RESINE EPOXYDE RESISTANTES AUX CHOCS

(30) Priorität: 10.04.2000 DE 10017783; 10.04.2000 DE 10017784
(43) Veröffentlichungstag der Anmeldung: 08.01.2003
(73) Patentinhaber: Henkel Kommanditgesellschaft auf Aktien, 40589 Düsseldorf-Holthausen (DE)
(72) Erfinder: SCHÖNFELD, Rainer, 40221 Düsseldorf (DE); SCHENKEL, Hubert, 69207 Sandhausen (DE); KÜSTER, Harald, 40625 Düsseldorf (DE)
(86) Internationale Anmeldenummer: PCT/EP2001/003699
(87) Internationale Veröffentlichungsnummer: WO 2001/094492

(56) Entgegenhaltungen:
- EP-A- 0 308 664
- DE-A- 19 845 607
- US-A- 5 290 857

## Beschreibung

Die vorliegende Erfindung betrifft Gemische aus speziellen Copolymeren mit mindestens einer Glasübergangstemperatur von -30°C oder niedriger und carboxylterminierten Polyamiden bzw. Polyimiden, Gemische dieser Komponenten mit Epoxidharzen und/oder Addukten von Epoxidharzen an das Copolymere mit niedriger Glasübergangstemperatur und/oder das Polyamid oder das Polyimid sowie thermisch aktivierbare latente Härter für die Harzkomponenten, sowie gegebenenfalls Beschleuniger, Füllstoffe, Thixotropier-Hilfsmittel und weitere übliche Zusatzstoffe. Die Erfindung betrifft ferner ein Verfahren zur Herstellung dieser Zusammensetzungen sowie zu deren Verwendung als reaktiven Klebstoff.

Reaktive Schmelzklebstoffe auf Epoxidbasis sind bekannt. Im Maschinen-, Fahrzeug- oder Gerätebau, insbesondere im Flugzeugbau, Schienenfahrzeugbau oder Kraftfahrzeugbau werden die Bauteile aus den verschiedenen metallischen Komponenten und/oder Verbundwerkstoffen in zunehmendem Maße mit Hilfe von Klebstoffen gefügt. Für strukturelle Verklebungen mit hohen Anforderungen an die Festigkeit werden in großem Umfang Epoxidklebstoffe eingesetzt, insbesondere als heißhärtende, einkomponentige Klebstoffe, die häufig auch als reaktive Schmelzklebstoffe formuliert werden. Reaktive Schmelzklebstoffe sind dabei Klebstoffe, die bei Raumtemperatur fest sind und bei Temperaturen bis zu etwa 80 bis 90°C erweichen und sich wie ein thermoplastisches Material verhalten. Erst bei höheren Temperaturen ab etwa 100°C werden die in diesen Schmelzklebstoffen vorhandenen latenten Härter thermisch aktiviert, so daß eine irreversible Aushärtung zu einem Duroplasten erfolgt. Zum Fügen der Bauteile, z. B. in der Fahrzeugindustrie, wird der Klebstoff zunächst warm auf mindestens eine Substratoberfläche aufgebracht, die zu verbindenden Bauteile werden dann gefügt. Beim Abkühlen erstarrt der Klebstoff dann und schafft durch dieses physikalische Erstarren eine ausreichende Handhabungsfestigkeit, d. h. eine vorläufige Verbindung. Die so miteinander verbundenen Bauteile werden in den verschiedenen Wasch-, Phosphatier- und Tauchlack-Bädem weiter behandelt. Erst anschließend wird der Klebstoff in einem Ofen bei höheren Temperaturen gehärtet.

Konventionelle Klebstoffe und Schmelzklebstoffe auf Basis von Epoxidharzen sind in ausgehärtetem Zustand hart und spröde. Die mit Ihnen erhaltenen Klebungen weisen zwar in aller Regel eine sehr hohe Zugscherfestigkeit auf. Bei schälender, schlagender oder schlagschälender Beanspruchung, insbesondere bei tieferen Temperaturen, platzen diese jedoch ab, so daß es bei dieser Beanspruchungsart der Klebefuge leicht zum Bindungsverlust kommt. Es hat daher bereits zahlreiche Vorschläge gegeben, Epoxidharze durch flexible Zusätze so zu modifizieren, daß ihre Sprödigkeit deutlich reduziert wird. Ein gängiges Verfahren beruht auf der Verwendung spezieller Kautschukaddukte an Epoxidharze, die als heterodisperse Phase in der Epoxidharzmatrix eingelagert sind, so daß die Epoxide schlagfester werden, diese Epoxidharz-Zusammensetzungen werden auch als "toughened" bezeichnet. Eine gängige, bekannte Modifizierung von Epoxidharzen der vorgenannten Art besteht in der Umsetzung eines Polybutadien-Co-Acrylnitrilcopolymers mit Carboxyl-Endgruppen mit einem Epoxidharz. Dieses Kautschuk-Epoxidaddukt wird dann in einem oder mehreren unterschiedlichen Epoxidharzen eindispergiert. Dabei muß die Reaktion des Epoxidharzes mit dem carboxylgruppenhaltigen Butadien-Acrylnitrilkautschuk so geführt werden, daß es nicht zu einer vorzeitigen Aushärtung des Adduktes führt. Obwohl derartig modifizierte Epoxidharz-Zusammensetzungen in bezug auf ihre Schlagfestigkeit bereits eine deutliche Verbesserung gegenüber den unmodifizierten Epoxidharzen darstellen, ist ihr Verhalten gegenüber schälenden bzw. schlagschälenden Beanspruchungen immer noch nicht ausreichend.

Aus der EP-A-0 343 676 sind Schmelzklebstoffzusammensetzungen bekannt, die aus einem Gemisch von mehreren Epoxidharzen, einem phenolischen Harz sowie einem Polyurethan-Epoxidaddukt zusammengesetzt sind. Das darin enthaltene Polyurethan-Epoxidaddukt besteht aus einem Umsetzungsprodukt von mehreren Polyalkylenglycolhomo- und Copolymeren mit primären und sekundären OH-Gruppen, einem Diisocyanat und mindestens einem Epoxidharz. Es wird angegeben, daß diese Schmelzklebstoffzusammensetzung gegenüber verschiedenen, kommerziellen einkomponentigen Schmelzklebstoffzusammensetzungen in ihrer Scherfestigkeit, Schälfestigkeit und Schlagfestigkeit verbessert sind, über die Klebstoffeigenschaften der ausgehärteten Klebefuge bei tiefen Temperaturen werden keine Angaben gemacht.

Die US-A-5 290 857 beschreibt eine Epoxidharzklebstoffzusammensetzung enthaltend ein Epoxidharz sowie ein pulverförmiges Kern/Schalepolymer und einen wärmeaktivierbaren Härter für das Epoxidharz. Das pulverförmige Kern/Schalepolymer ist zusammengesetzt aus einem Kern enthaltend ein Acrylatoder Methacrylatpolymer mit einer Glasübergangstemperatur von -30°C oder niedriger und einer Schale enthaltend ein Acrylat- oder Methacrylatpolymer, das vernetzende Monomereinheiten enthält und dessen Glasübergangstemperatur größer oder gleich 70°C ist, wobei das Gewichtsverhältnis des Kerns zur Schale im Bereich zwischen 10:1 bis 1:4 liegt. Es wird angegeben, daß diese Zusammensetzungen ausgezeichnete Klebstoffeigenschaften wie Schlagfestigkeit, Zugscherfestigkeit und T-Schälfestigkeit haben und außerdem eine gute partielle Gelierbarkeit besitzen. Angaben über die Eigenschaften von Verklebungen mit diesen Klebstoffen bei tiefen Temperaturen werden nicht gemacht.

In analoger Weise beschreibt die US-A-5 686 509 eine adhäsionsverstärkende Zusammensetzung für Epoxidharze bestehend aus pulverförmigen Copolymerteilchen, die ionisch mit einem mono- oder divalenten Metallkation vernetzt sind. Dabei ist der Kernbereich des Kern/Schalepolymers aus einem Dienmonomer und gegebenenfalls vernetzenden Monomereinheiten zusammengesetzt, der eine Glasübergangstemperatur kleiner oder gleich -30°C hat. Das Schalencopolymer hat eine Glasübergangstemperatur von mindestens 70°C und ist aus Acrylat- oder Methacrylatmonomereinheiten und radikalisch polymerisierbare ungesättigte Carbonsäureeinheiten zusammengesetzt. Die Klebstoffzusammensetzung soll dabei auf 100 Teile Epoxidharz 15 bis 60 Gewichtsteile des adhäsionsverstärkenden Copolymerpulvers und 3 bis 30 Gewichtsteile eines hitzeaktivierbaren Härtungsagens haben. Diese Zusammensetzungen werden zur Anwendung als Strukturklebstoffe für Automobilteile empfohlen. Angaben über die Tieftemperatureigenschaften derartiger Verklebungen werden nicht gemacht.

Aus der EP-A-0 308 664 sind Epoxidharz-Zusammensetzungen bekannt, die ein Epoxid-Addukt eines carboxylgruppenhaltigen Copolymeren auf Basis von Butadien-Acrylnitril oder ähnlichen Butadiencopolymeren enthalten sowie ein Umsetzungsprodukt eines in Epoxidharzen löslichen oder dispergierbaren elastomeren Prepolymeren mit endständigen Isocyanatgruppen mit einem Polyphenol oder Aminophenol sowie nachfolgender Umsetzung dieses Adduktes mit einem Epoxidharz. Weiterhin können diese Zusammensetzungen ein oder mehrere Epoxidharze enthalten. Fernerhin werden zur Härtung für diese Zusammensetzungen aminofunktionelle Härter, Polyaminoamide, Polyphenole, Polycarbonsäuren und ihre Anhydride oder katalytische Härtungsmittel und gegebenenfalls Beschleuniger vorgeschlagen. Es wird angegeben, daß diese Zusammensetzungen sich als Klebstoffe eignen, die je nach konkreter Zusammensetzung hohe Festigkeit, hohe Glasübergangstemperatur, hohe Schälfestigkeit, hohe Schlagzähigkeit oder hohe Rißfortpflanzungsbeständigkeit haben können.

In analoger Weise beschreibt die EP-A-0 353 190 Epoxidharz-Zusammensetzungen enthaltend ein Addukt aus einem Epoxidharz und einem carboxylierten Butadien-Acrylnitrilcopolymeren sowie ein Umsetzungsprodukt eines hydroxyl-, mercapto- oder aminoterminierten Polyalkylenglycols mit einer Phenolcarbonsäure mit nachfolgender Umsetzung der phenolischen Gruppe mit einem Epoxidharz. Der EP-A-0 353 190 ist zu entnehmen, daß diese Zusammensetzungen sich zur Herstellung von Klebstoffen, Klebefilmen, Patches, Dichtungsmassen, Lacken oder Matrixharzen eignet.

Die EP-A-338985 beschreibt modifizierte Epoxidharze, die ein flüssiges Copolymeres auf der Basis von Butadien, einem polaren, ethylenisch ungesättigten Comonomeren und ggf. weiteren ethylenisch ungesättigten Comonomeren enthalten und weiterhin ein Umsetzungsprodukt aus dihydroxyterminierten bzw. diaminoterminierten Polyalkylenglycolen und Diisocyanaten sowie einem Monophenol, einem Mercaptoalkohol oder einem aliphatischen Lactam. Gemäß der Lehre dieser Schrift lassen sich diese Zusammensetzungen zur Flexibilisierung von Epoxidharzen einsetzen. Zusätzlich zu den vorgenannten Bestandteilen sollen diese Zusammensetzungen noch Epoxidharze und einen Härter bzw. Beschleuniger enthalten. Derartige Gemische sollen sich als Klebstoffe, Klebefilme, Patches, Matrixharze, Lacke oder Dichtungsmassen verwenden.

Die EP-A-366157 beschreibt Epoxidharze enthaltend Polyester auf Polyalkylenglycolbasis und bei höheren Temperaturen wirksame Härter. Diese Zusammensetzungen enthalten mindestens eine Verbindung mit mindestens einer 1,2-Epoxidgruppe im Molekül sowie ein Umsetzungsprodukt eines aliphatischen oder cycloaliphatischen Diols mit einer aromatischen Hydroxycarbonsäure sowie einen bei höheren Temperaturen wirksamen Härter für die Epoxidgruppen-haltige Verbindung. Es wird ausgeführt, daß die gehärteten Epoxidharzmischungen eine sehr gute Tieftemperaturflexibilität und Korrosionsbeständigkeit aufweisen sollen. Über deren Eignung als Klebstoffe mit hoher Schälfestigkeit bei tiefen Temperaturen, insbesondere bei schlagartiger Belastung, wird keine Aussage gemacht.

Die EP-A-272222 beschreibt Epoxidharze enthaltend Polyester auf Polyalkylenglycolbasis. Dabei leiten sich diese Polyester von aliphatischen, cycloaliphatischen oder aromatischen Carbonsäuren und/oder aromatischen Hydroxycarbonsäuren und aliphatischen oder cycloaliphatischen Diolen ab, wobei mindesten 70 Gew.% der Carbonsäurederivate sich von Dimer- und/oder Trimerfettsäuren ableiten. Es wird angegeben, daß derartige Epoxidharz-Zusammensetzungen für die Bereitstellung von hitzehärtbaren Klebstoffen zur Verklebung von Stahl- und Aluminium-Substraten geeignet sind. Die gehärteten Epoxidharzmischungen sollen eine gute Tieftemperaturflexibilität und Korrosionsbeständigkeit aufweisen.

Aus der EP-A-307666 sind wasserunlösliche Verbindungen bekannt, die im wesentlichen frei von Isocyanatgruppen sind und wenigstens zwei freie phenolische Hydroxylgruppen pro Molekül aufweisen und die erhältlich sind durch Umsetzung eines prepolymeren Polyisocyanats, welches ein Addukt eines Polyisocyanats an eine prepolymere Polyhydroxyl- oder Polysulfhydryl-Verbindung ist, oder sich von einem prepolymeren Polyetheramin ableitet. Dieses prepolymere Polyisocyanat wird mit mindestens einem Phenol mit zwei oder drei phenolischen Hydroxylgruppen oder einem Aminophenol mit ein oder zwei phenolischen Hydroxylgruppen umgesetzt. Diese Verbindungen werden dann mit Epoxidharzen und thermisch aktivierbaren Härtern versetzt um als Klebstoffe einsetzbar zu sein. Angaben über das Tieftemperaturverhalten, insbesondere bei schlagartiger Belastung sind dieser Schrift nicht zu entnehmen.

Die EP-A-381625 beschreibt härtbare Zusammensetzungen enthaltend ein Epoxidharz, einen bei erhöhter Temperatur aktivierbaren Härter, ein flüssiges Copolymer auf der Basis von Butadien, Acrylnitril und ggf. weiteren ethylenisch ungesättigten Comonomeren sowie ein segmentiertes Copolymeres bestehend im wesentlichen aus wiederkehrenden Weichsegmenten mit Polypropylenglycol- oder Polybutylenglycoleinheiten und ausgewählten Hartsegmenten mit einer Erweichungstemperatur von oberhalb 25°C. Gemäß der Lehre dieser Schrift werden die segmentierten Copolymeren aus Polyetherdiolen auf der Basis von Polypropylenglycol, Polytetramethylenglycol oder aminoterminierten Polyetherdiolen und gesättigten aliphatischen Dicarbonsäuren mit 4 bis 12 Kohlenstoffatomen oder aromatischen Dicarbonsäuren mit 8 bis 12 Kohlenstoffatomen aufgebaut und können weiterhin kurzkettige Diole oder Diamine in ihrem Hartsegment enthalten. Gemäß der Lehre dieser Schrift eignen sich diese Zusammensetzungen als Klebemittel, insbesondere als Schmelzkleber sowie als Matrixharze oder als Oberflächenbeschichtungsmittel. Festigkeiten, insbesondere Schälfestigkeiten bei schlagartiger Belastung und tiefer Temperatur werden nicht offenbart.

Gemäß der Lehre der EP-A-0 354 498 bzw. EP-A-0 591 307 lassen sich reaktive Schmelzklebstoffzusammensetzungen aus einer Harzkomponente, mindestens einem thermisch aktivierbaren latenten Härter für die Harzkomponente sowie gegebenenfalls Beschleuniger, Füllstoffe, Thixotropierhilfsmittel und weiteren üblichen Zusätzen herstellen, wobei die Harzkomponente durch die Umsetzung von einem bei Raumtemperatur festen Epoxidharz und einem bei Raumtemperatur flüssigen Epoxidharz mit einem oder mehreren linearen oder verzweigten Polyoxypropylen mit Amino-Endgruppen erhältlich sind. Dabei sollen die Epoxidharze in einer solchen Menge, bezogen auf das Amino-terminierte Polyoxypropylen, eingesetzt werden, daß ein Überschuß an Epoxidgruppen bezogen auf die Aminogruppen gewährleistet ist. Diese Klebstoffzusammensetzungen weisen bereits einen hohen Schälwiderstand im Winkelschälversuch auf, der auch bei tiefen Temperaturen erhalten bleibt.

Die noch unveröffentlichte DE-A-19845607.7 beschreibt Kondensationsprodukte aus Carbonsäuredianhydriden, Di- oder Polyaminen, insbesondere Polyoxyalkylenamiden und Polyphenolen oder Aminophenolen und deren Eignung als Aufbaukomponente für Epoxidharz-Zusammensetzungen. Derartig aufgebaute Zusammensetzungen enthalten zusätzlich Kautschuk-modifizierte Epoxidharze sowie flüssige und/oder feste Polyepoxide sowie übliche latente Härter und Beschleuniger und ggf. Füllstoffe. Sie eignen sich als schlagfeste, schlagschälfeste und schälfeste Klebstoffe im Fahrzeugbau. Obwohl diese Klebstoff-Zusammensetzungen insgesamt bereits ein sehr gutes Eigenschaftsspektrum auch bei tiefen Temperaturen haben, besteht weiterhin Bedarf an neuen und verbesserten Klebstoff-Zusammensetzungen für diese Anwendungsfelder.

Aufgabe der vorliegenden Erfindung ist es, reaktive Klebstoffe der eingangs genannten Art dahingehend weiter zu verbessern, daß sie eine ausreichende Flexibilität aufweisen, eine erhöhte Schälfestigkeit nicht nur bei Raumtemperatur sondern insbesondere auch bei tiefen Temperaturen unter 0°C aufweisen. Insbesondere soll die Schälfestigkeit bei tiefen Temperaturen und schlagartiger Belastung einen möglichst hohen Wert aufweisen, damit strukturell geklebte Bauteile auch im Falle eines Unfalls (Crash-Verhalten) den modernen Sicherheitsanforderungen im Fahrzeugbau entsprechen. Dabei sollen diese Verbesserungen ohne Beeinträchtigung der Schälfestigkeit sowie der Zugscherfestigkeit bei hohen Temperaturen erzielt werden. Die reaktiven Klebstoffe müssen darüber hinaus unmittelbar nach der Applikation und vor dem endgültigen Aushärten eine ausreichende Auswaschbeständigkeit haben. Dazu müssen die Klebstoff-Zusammensetzungen als Schmelzklebstoff oder als hochviskoser, warm zu verarbeitender Klebstoff formulierbar sein. Eine andere Möglichkeit ist die Formulierung als Klebstoff, der durch eine thermische Vorreaktion im sogenannten "Rohbau-Ofen" oder durch Induktionsheizung der Fügeteile geliert werden kann.

Die erfindungsgemäße Lösung der Aufgabe ist den Ansprüchen zu entnehmen. Sie besteht im wesentlichen in der Bereitstellung von Zusammensetzungen, die die folgenden Bestandteile enthalten:
A) mindestens ein Epoxidharz mit durchschnittlich mehr als einer Epoxidgruppe pro Molekül
B) ein Copolymeres mit einer Glasübergangstemperatur von -30°C oder niedriger und gegenüber Epoxiden reaktiven Gruppen oder ein Umsetzungsprodukt dieses Copolymeren mit einem stöchiometrischen Überschuß eines Epoxidharzes gemäß A)
C) einen latenten, bei erhöhter Temperatur aktivierbaren, Härter für Komponente A), und entweder
D) ein Reaktionsprodukt herstellbar aus einem difunktionellen aminoterminierten Polymer und einem Tri- oder Tetracarbonsäureanhydrid, gekennzeichnet durch im Mittel mehr als eine Imidgruppe und Carboxylgruppe pro Molekül, oder
E) ein Reaktionsprodukt herstellbar aus einem tri- oder mehrfunktionellen Polyol oder einem tri- oder mehrfunktionellen aminoterminierten Polymer und einem cyclischen Carbonsäureanhydrid, wobei das Reaktionsprodukt im Mittel mehr als eine Carboxylgruppe pro Molekül enthält, oder
F) eine Mischung der Reaktionsprodukte gemäß D) und E).

Vorzugsweise werden die Komponenten D) und / oder E) in separaten Reaktionen aus den Säureanhydriden und aminoterminierten bzw. hydroxyterminierten Polymeren hergestellt. Anschließend können diese Reaktionsprodukte mit einem großen stöchiometrischen Überschuß an Epoxidharzen gemäß A) umgesetzt werden oder einfach mit diesen Epoxidharzen gemischt werden wobei anschließend die thermisch aktivierbaren Härter und/oder weiteren Zusätze dazu gemischt werden.

Beispiele für die Copolymeren der Aufbaukomponente B) sind 1,3-Dienpolymere mit Carboxylgruppen und weiteren polaren, ethylenisch ungesättigten Comonomeren. Als Dien kann dabei Butadien, Isopren oder Chloropren eingesetzt werden, bevorzugt ist Butadien. Beispiele für polare, ethylenisch ungesättigte Comonomere sind Acrylsäure, Methacrylsäure, niedere Alkylester der Acryl- oder Methacrylsäure, beispielsweise deren Methyl- oder Ethylester, Amide der Acryloder Methacrylsäure, Fumarsäure, Itakonsäure, Maleinsäure oder deren niedere Alkylester oder Halbester, oder Maleinsäure- oder Itakonsäureanhydrid, Vinylester wie beispielsweise Vinylacetat oder insbesondere Acrylnitril oder Methacrylnitril. Ganz besonders bevorzugte Copolymere A) sind Carboxyl-terminierte Butadienacrylnitrilcopolymere (CTBN), die in flüssiger Form unter dem Handelsnamen Hycar von der Firma B. F. Goodrich angeboten werden. Diese haben Molekulargewichte zwischen 2000 und 5000 und Acrylnitrilgehalte zwischen 10 % und 30 %. Konkrete Beispiele sind Hycar CTBN 1300 X 8, 1300 X 13 oder 1300 X 15.

Weiterhin können als Aufbaukomponente B) auch die aus der US-A-5 290 857 bzw. aus der US-A-5 686 509 bekannten Kern/Schale-Polymeren eingesetzt werden. Dabei sollen die Kernmonomeren eine Glasübergangstemperatur von kleiner oder gleich -30 °C haben, diese Monomeren können ausgewählt werden aus der Gruppe der vorgenannten Dienmonomeren oder geeigneten Acrylat- oder Methacrylatmonomeren, ggf. kann das Kernpolymer in geringer Menge vernetzende Comonomereinheiten enthalten. Die Schale ist dabei aus Copolymeren aufgebaut, die eine Glasübergangstemperatur von mindestens 60 °C hat. Die Schale ist vorzugsweise aus niederen Alkylacrylat oder Methacrylat-Monomereinheiten (Methyl- bzw. Ethylester) sowie polaren Monomeren wie (Meth)acrylnitril, (Meth)acrylamid, Styrol oder radikalisch polymerisierbaren ungesättigten Carbonsäuren oder Carbonsäureanhydriden.

Eine weitere Möglichkeit für die Aufbaukomponente B) ist die Verwendung von Dendrimeren, diese werden auch als dentritische Polymere, Kaskadenpolymere oder "starburst"-Polymere bezeichnet. Sie werden bekanntlich schrittweise durch Verknüpfung von jeweils zwei oder mehreren Monomeren mit jedem bereits gebundenen Monomeren aufgebaut, so daß mit jedem Schritt die Zahl der Monomer-Endgruppen exponentiell anwächst und am Ende eine kugelförmige Baumstuktur entsteht. Derartige Dendrime können z.B. durch Michael-Addition von Acrylsäuremethylester an Amoniak oder Amine hergestellt werden.

Besonders bevorzugt für die Aufbaukomponente B) sind jedoch die Addukte aus Epoxidharzen und den vorgenannten flüssigen CTBN-Kautschuken.

Die Reaktionsprodukte D) können durch die nachfolgenden Formelbilder (I) und/oder (II) dargestellt werden, die Reaktionsprodukte E) können durch die Formel (III) mit den Substrukturen (IV) bzw. (V) dargestellt werden, wenn die Ausgangskomponenten tri- oder mehrfunktionelle Polyole und sämtliche Typen von Carbonsäureanhydriden sind oder die Ausgangskomponenten tri- oder mehrfunktionelle aminoterminierte Polymere mit cyclischen Carbonsäureanhydriden von Dicarbonsäuren handelt. Bei der Umsetzung von triund mehrfunktionellen arminotherminierten Polymeren mit Tri- bzw. Tetracarbonsäureanhydriden werden die Imidstrukturen gemäß Formelbildem gemäß (I) bzw. (II) erhalten.

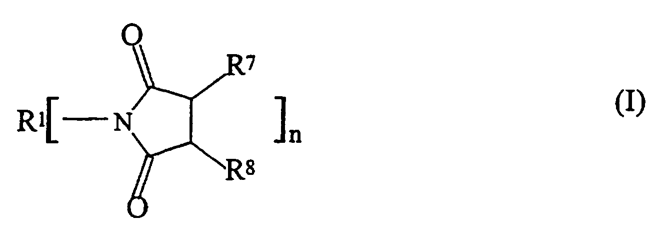

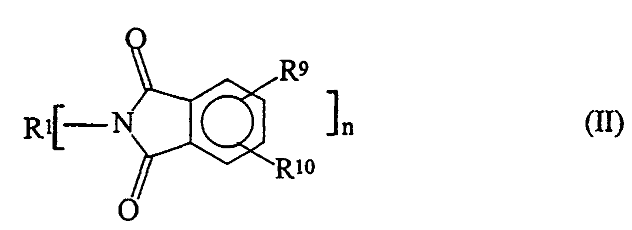

R₁₁[―X―(C=O)―R²―COOH]ₘ (III)

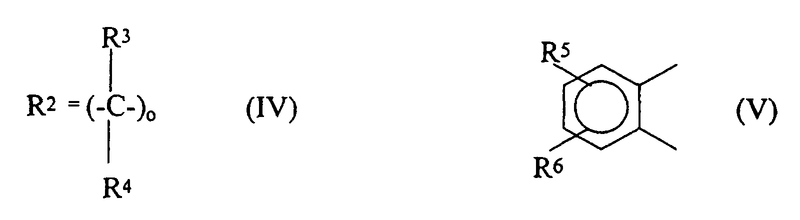

Die Reaktionsprodukte gemäß E) aus tri- oder mehrfunktionellen Polyolen mit allen Typen von Carbonsäureanhydriden haben Strukturen gemäß Formel (III) wobei X = -O- ist. Auch die Reaktionsprodukte E) aus tri- oder mehrfunktionellen aminoterminierten Polymeren und Carbonsäureanhydriden von Dicarbonsäuren führen zu Strukturen gemäß Formelbild (III), in diesem Falle ist X= -NH-.

Für die Reaktionsprodukte D) gemäß den Formelbildern (I) und (II) ist R¹ ein zweiwertiger Rest eines aminoterminierten Polymers nach dem Entfernen der terminalen Aminogruppe, daß heißt n ist = 2.

Die für das Kondensationsprodukt D) verwendeten difunktionellen aminoterminierten Polymeren können bevorzugt aminoterminierte Polyalkylenglykole, insbesondere die difunktionellen aminoterminierten Polypropylenglykole, Polyethylenglykole oder Copolymere von Propylenglykol und Ethylenglykol sein. Diese sind auch unter dem Namen "Jeffamine" (Handelsname der Firma Huntsman) bekannt. Weiterhin sind geeignet die difunktionellen aminoterminierten Polyoxytetramethylenglykole, auch Poly-THF genannt. Außerdem sind difunktionelle aminoterminierte Polybutadienverbindungen als Aufbaukomponenten geeignet sowie Aminobenzoesäureester von Polypropylenglykolen, Polyethylenglykolen oder Poly-THF (bekannt unter dem Handelsnamen "Versalink oligomeric Diamines" der Firma Air Products). Die aminoterminierten Polyalkylenglycole oder Polybutadiene haben Molekulargewichte zwischen 400 und 6000.

Werden die vorgenannten difunktionellen aminoterminierten Polymeren mit aliphatischen Tricarbonsäureanhydriden wie z.B. Citronensäureanhydrid, 1,2,3-Propantricarbonsäureanhydrid oder Aconitsäureanhydrid umgesetzt, so entstehen die Imidstrukturen gemäß Formelbild (I), dabei ist entweder R⁷ oder R⁸ ein Alkylcarbonsäurerest und der zweite Rest Wasserstoff oder ein nicht funktioneller Alkylrest.

Bei Umsetzung der aromatischen Tricarbonsäureanhydride bzw. Tetracarbonsäureanhydride entstehen die Imidstrukturen gemäß Formelbild (II) in denen R⁹ und/oder R¹⁰ eine freie Carboxylgruppe oder beide zusammen ein cyclischer Carbonsäureanhydridrest sein können. R⁹ und/oder R¹⁰ können jedoch auch Arylreste sein, die entweder durch eine kovalente Bindung oder durch Heteroatom an den dargestellten aromatischen Ring gebunden sind, dabei soll mindestens einer der Reste eine freie Carboxylgruppe tragen. Weiterhin können R⁹ und R¹⁰ zusammen einen oder mehrere anellierte aromatische Ringe bedeuten, wobei wiederum eine freie Carboxylgruppe als Substituent an dem Aromatensystem vorhanden sein muss.

Beispiele für einzusetzende aromatische Tri- oder Tetracarbonsäureanhydride sind 1,2,3- oder 1,2,4-Benzoltricarbonsäureanhydrid, Mellophansäure-, Pyromellitsäure-, 1,8:4,5- bzw. 2,3:6,7-Naphthalin-tetracarbonsäure-, Perylendianhydrid, Biphenyltetracarbonsäure-, Diphenylethertetracarbonsäure-, Diphenylmethantetracarbonsäure-, 2,2-Diphenylpropantetracarbonsäure-, Benzophenontetracarbonsäure-dianhydrid, Diphenylsulfontetracarbonsäuredianhydrid oder deren Mischungen.

Die Reaktionsprodukte E) aus einem tri- oder mehrfunktionellen Polyol lassen sich durch die Formel (III) darstellen, dabei ist R¹¹ ein tri- oder mehrfunktionelles Polyol, vorzugsweise ein trifunktionelles Polyalkylenglykol vom Typ des Polypropylenglykols, Polyethylenglykols oder deren Copolymeren oder des Poly-THF. Es können jedoch auch hydroxyfunktionelle Polybutadiene mit einer Funktionalität größer als 2 eingesetzt werden. Bei der Verwendung von Säureanhydriden von Dicarbonsäuren wie z.B. Maleinsäureanhydrid, Succinanhydrid oder aliphatischen Tricarbonsäureanhydriden hat der Rest R² in Formel (III) die Struktur (IV), wobei o zwei oder drei ist und R³ und R⁴ unabhängig voneinander vorzugsweise H- oder gemeinsam eine weitere kovalente Bindung bedeuten. Die beiden Reste können jedoch auch C1 bis C12-Alkyl- oder Arylreste sein, die ggf. Carboxylgruppen tragen. Bei der Verwendung von aromatischen Carbonsäureanhydriden kann R² in der Formel (III) durch das Strukturelement (V) dargestellt werden. In diesem Strukturelement können R⁵ und R⁶ unabhängig voneinander Alkyl- oder Arylgruppen sein, sie können jedoch auch zusammen ein cyclischen Carbonsäureanhydrid, anelliert an den aromatischen Ring, darstellen. Eine weitere Möglichkeit ist, daß R⁵ und R⁶ zusammen einen oder mehrere anellierte Ringe an den in der Struktureinheit (V) dargestellten aromatischen Ring bedeuten, die ggf. weitere Carboxylgruppen tragen können.

Wenn für das Reaktionsprodukt E) tri- oder mehrfunktionelle aminoterminierte Polymere verwendet werden, werden vorzugsweise Tri- oder Tetracarbonsäureanhydride als zweite Komponente eingesetzt, so daß die cyclischen Imidstrukturen der Formeln (I) und (II) entstehen. Bei der Verwendung von Carbonsäureanhydriden aus Dicarbonsäuren soll die Kondensationsreaktion so gelenkt werden, daß offenkettige Amidstrukturen mit freier Carboxylgruppe entstehen, so daß in Formel (III) X = -NH- bedeutet.

Konkrete Beispiele für Carbonsäureanhydride sind Maleinsäure-, Bemsteinsäure-, Citronensäure-, 1,2,3-Propantricarbonsäure-, Aconitsäure-, Phthalsäure-, 1,2,3-oder 1,2,4-Benzoltricarbonsäureanhydrid, Mellophansäure-, Pyromellitsäure-, 1,8:4,5- bzw. 2,3:6,7-Naphthalin-tetracarbonsäure-, Perylendianhydrid, Biphenyltetracarbonsäure-, Diphenylethertetracarbonsäure-, Diphenylmethantetracarbonsäure-, 2,2-Diphenylpropantetracarbonsäure-, Benzophenontetracarbonsäure-dianhydrid, Diphenylsulfontetracarbonsäuredianhydrid oder deren Mischungen.

Prinzipiell können neben den vorgenannten Carbonsäureanhydriden auch maleinisierte Öle und Fette als Anhydridkomponenten für die Herstellung der Kondensationsprodukte D) oder E) verwendet werden. Maleinisierte Öle und Fette sowie niedermolekulare Polyene werden bekanntermaßen durch En-Reaktion oder durch frei radikalische Reaktion von Maleinsäureanhydrid mit ungesättigten Verbindungen hergestellt.

Als Epoxidharze für die Komponente A), für die Epoxid-Adduktbildung bzw. zur Abmischung oder Umsetzung mit den Komponenten B) und/oder D) und/oder E) eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin.

Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab.

Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure.

Weitere Epoxide leiten sich von den Epoxidierungsprodukten olefinisch ungesättigter cycloaliphatischer Verbindungen oder von nativen Ölen und Fetten ab.

Ganz besonders bevorzugt werden die Epoxidharze, die sich durch Reaktion von Bisphenol A oder Bisphenol F und Epichlorhydrin ableiten. Dabei werden in der Regel Mischungen aus flüssigen und festen Epoxidharzen eingesetzt, wobei die flüssigen Epoxidharze vorzugsweise auf der Basis des Bisphenols A sind und ein hinreichend niedriges Molekulargewicht aufweisen. Insbesondere für die Adduktbildung mit den Komponenten B) und/oder D) und/oder E) werden bei Raumtemperatur flüssige Epoxidharze eingesetzt, die in der Regel ein EpoxidÄquivalentgewicht von 150 bis etwa 220 haben, besonders bevorzugt ist ein Epoxi-Äquivalentgewichtbereich von 182 bis 192.

Die Härte des reaktiven Klebstoffes im erkalteten Zustand, d. h. insbesondere nach dem Auftragen auf das zu fügende Substrat, aber vor der Aushärtung, hängt vom Kondensationsgrad und damit Molekulargewicht insbesondere der Komponente D) ab sowie vom Verhältnis von festem Epoxidharz zu flüssigem Epoxidharz. Je höher der Kondensationsgrad (und damit das Molekulargewicht) des Kondensationsproduktes D) ist und je größer der Anteil an festem Epoxidharz in der Zusammensetzung ist, um so härter ist der erkaltete, semikristalline Klebstoff.

Als thermisch aktivierbare oder latenter Härter C) für das Epoxidharz-Bindemittelsystem aus den Komponenten A), B), D) und / oder E) können Guanidine, substituierte Guanidine, substituierte Harnstoffe, Melaminharze, Guanamin-Derivate, cyclische tertiäre Amine, aromatische Amine und/oder deren Mischungen eingesetzt werden. Dabei können die Härter sowohl stöchiometrisch mit in die Härtungsreaktion einbezogen sein, sie können jedoch auch katalytisch wirksam sein. Beispiele für substituierte Guanidine sind Methylguanidin, Dimethylguanidin, Trimethylguanidin, Tetramethylguanidin, Methylisobiguanidin, Dimethylisobiguanidin, Tetramethylisobiguanidin, Hexamethylisobiguanidin, Hepamethylisobiguanidin und ganz besonders Cyanguanidin (Dicyandiamid). Als Vertreter für geeignete Guanamin-Derivate seine alkylierte Benzoguanamin-Harze, Benzoguanamin-Harze oder Methoximethyl-ethoxymethylbenzoguanamin genannt. Für die einkomponentigen, hitzehärtenden Schmelzklebstoffe ist selbstverständlich das Auswahlkriterium die niedrige Löslichkeit dieser Stoffe bei Raumtemperatur in dem Harzsystem, so daß hier feste, feinvermahlene Härter den Vorzug haben, insbesondere ist Dicyandiamid geeignet. Damit ist eine gute Lagerstabilität der Zusammensetzung gewährleistet.

Zusätzlich zu oder anstelle von den vorgenannten Härtern können katalytisch wirksame substituierte Harnstoffe eingesetzt werden. Dies sind insbesondere der p-Chlorphenyl-N,N-dimethylharnstoff (Monuron), 3-Phenyl-1,1-dimethylhamstoff (Fenuron) oder 3,4-Dichlorphenyl-N,N-dimethylhamstoff (Diuron). Prinzipiell können auch katalytisch wirksame tertiäre Aryl- oder Alkyl-Amine, wie beispielsweise das Benzyldimethylamin, Tris(dimethylamino)phenol, Piperidin oder Piperidinderivate eingesetzt werden, diese haben jedoch vielfach eine zu hohe Löslichkeit in dem Klebstoffsystem, so daß hier keine brauchbare Lagerstabilität des einkomponentigen Systems erreicht wird. Weiterhin können diverse, vorzugsweise feste, Imidazolderivate als katalytisch wirksame Beschleuniger eingesetzt werden. Stellvertretend genannt seien 2-Ethyl-2-methylimidazol, N-Butylimidazol, Benzimidazol sowie N-C₁ bis C₁₂-Alkylimidazole oder N-Arylimidazole.

In der Regel enthalten die erfindungsgemäßen Klebstoffe weiterhin an sich bekannte Füllstoffe wie zum Beispiel die diversen gemahlenen oder gefällten Kreiden, Ruß, Calcium-Magnesiumcarbonate, Schwerspat sowie insbesondere silicatische Füllstoffe vom Typ des Aluminium-Magnesium-Calcium-Silicats, z. B. Wollastonit, Chlorit.

Weiterhin können die erfindungsgemäßen Klebstoffzusammensetzungen gängige weitere Hilfs- und Zusatzmittel wie z. B. Weichmacher, Reaktiwerdünner, Rheologie-Hilfsmittel, Netzmittel, Alterungsschutzmittel, Stabilisatoren und/oder Farbpigmente enthalten.

Die erfindungsgemäßen Klebstoffe lassen sich einerseits als einkomponentige Klebstoffe formulieren, wobei diese sowohl als hochviskose warm applizierbare Klebstoffe formuliert werden können, als auch als thermisch härtbare Schmelzklebstoffe. Weiterhin können diese Klebstoffe als einkomponentige vorgelierbare Klebstoffe formuliert werden, im letztgenannten Fall enthalten die Zusammensetzungen entweder feinteilige thermoplastische Pulver, wie z. B. Polymethacrylate, Polyvinylbutyral oder andere thermoplastische (Co)polymere oder das Härtungssystem ist so abgestimmt, daß ein zweistufiger Härtungsprozeß stattfindet, wobei der Gelierungsschritt nur eine teilweise Aushärtung des Klebstoffes bewirkt und die Endaushärtung im Fahrzeugbau z. B. in einem der Lackieröfen, vorzugsweise im KTL-Ofen, stattfindet.

Die erfindungsgemäßen Klebstoffzusammensetzungen können auch als zweikomponentige Epoxy-Klebstoffe formuliert werden, bei denen die beiden Reaktionskomponenten erst kurz vor der Applikation miteinander vermischt werden, wobei die Aushärtung dann bei Raumtemperatur oder mäßig erhöhter Temperatur stattfindet. Als zweite Reaktionskomponente können hierbei die für zweikomponentige Epoxy-Klebstoffe an sich bekannten Reaktionskomponenten eingesetzt werden, beispielsweise Di- oder Polyamine, aminoterminierte Polyalkylenglycole (z. B. Jeffamine, Amino-Poly-THF) oder Polyaminoamide. Weitere Reaktivpartner können mercaptofunktionelle Prepolymere sein wie z. B. die flüssigen Thiokol-Polymere. Grundsätzlich können die erfindungsgemäßen Epoxyzusammensetzungen auch mit Carbonsäureanhydriden als zweiter Reaktionskomponente in zweikomponentigen Klebstofformulierungen ausgehärtet werden.

Neben den eingangs erwähnten Anwendungen können die erfindungsgemäßen Klebstoffzusammensetzungen auch als Vergußmassen in der Elektro- oder Elektronikindustrie, als Die-Attach-Klebstoff in der Elektronik zum Verkleben von Bauteilen auf Leiterplatten eingesetzt werden. Weitere Einsatzmöglichkeiten der erfindungsgemäßen Zusammensetzungen sind Matrix-Materialien für Verbundwerkstoffe wie z. B. faserverstärkte Verbundwerkstoffe.

Weitere bevorzugte Anwendungsgebiete für die erfindungsgemäßen Klebstoffzusammensetzungen sowohl in einkomponentiger hitzehärtbarer Form als auch in zweikomponentiger Form sind deren Verwendung als Strukturschaum, beispielsweise zur Bildung von Innenversteifungen von Hohlräumen im Fahrzeugbau, wobei die expandierenden Strukturschäume die Hohlraumkonstruktion des Fahrzeuges versteifen oder ihren Energieabsorptionsgrad heraufsetzen. Weiterhin können die Zusammensetzungen zur Herstellung von sogenannten "Versteifungspads" oder für versteifende Beschichtungen dünnwandiger Bleche oder Kunststoffbauteile, vorzugsweise im Fahrzeugbau, eingesetzt werden.

Ein ganz besonders bevorzugtes Anwendungsfeld der erfindungsgemäßen Klebstoffe sind jedoch strukturelle Verklebungen im Fahrzeugbau.

Je nach Anforderungsprofil an den Klebstoff in bezug auf seine Verarbeitungseigenschaften, die Flexibilität, Schlagschälfestigkeit oder Zugfestigkeit können die Mengenverhältnisse der Einzelkomponenten in verhältnismäßig weiten Grenzen variieren. Typische Bereiche für die wesentlichen Komponenten sind:
- Komponente A): 10-45 Gew.-%, vorzugsweise 15-30 Gew.-%, wobei sich diese Komponente aus einem oder mehreren flüssigen und/oder festen Epoxidharzen zusammensetzt und gegebenenfalls auch niedermolekulare Epoxide als Reaktiwerdünner enthalten kann,
- Komponente B): 5-25 Gew.-%, vorzugsweise 10-20 Gew.-%,
- Härterkomponente C) (für thermisch härtbare Einkomponentensysteme): 1-10 Gew.-%, vorzugsweise 3-8 Gew.-%,
- Komponente D): 0-30 Gew.-%, vorzugsweise 5-20 Gew.-%,
- Komponente E) 0 bis 30 Gew.%,
- Füllstoffe: 10-40 Gew.-%,
- Beschleuniger: 0,01 bis 3 Gew.-%, vorzugsweise 0,1 bis 0,8 Gew.-%,
- Rheologie-Hilfsmittel (Thixotropiermittel): 0,5-5 Gew.-%,
wobei sich die Summe der Bestandteile zu 100% ergänzt und mindestens eine der Komponenten D) und E) enthalten ist.

Wie bereits eingangs erwähnt, steigen die Anforderungen an moderne Strukturklebstoffe im Fahrzeugbau ständig weiter an, da immer mehr Bauelemente auch tragender Natur durch Klebeverfahren gefügt werden. Wie bereits in dem Aufsatz von G. Kötting und S. Singh, "Anforderungen an Klebstoffe für Strukturverbindungen im Karosseriebau", Adhesion 1988, Heft 9, Seite 19 bis 26 ausgeführt, müssen die Klebstoffe zum einen praxisrelevante Aspekte der Fertigung erfüllen, hierzu gehören automatisierbare Verarbeitung in kurzen Taktzeiten, Haftung auf geölten Blechen, Haftung auf verschiedenen Blechsorten sowie Kompatibilität mit den Prozeßbedingungen der Lackierstraße (Beständigkeit gegen Wasch- und Phosphatierbäder, härtbar während des Einbrennens der KTL-Grundierung, Beständigkeit gegenüber den nachfolgenden Lackier- und Trockungsoperationen). Darüber hinaus müssen moderne Strukturklebstoffe auch im ausgehärteten Zustand steigende Festigkeits- und Verformungseigenschaften erfüllen. Hierzu gehören die hohe Korrosionsbeständigkeit oder Biegesteifigkeit der strukturellen Bauteile sowie die Verformbarkeit bei mechanischer Belastung der Verklebung. Eine möglichst hohe Verformbarkeit der Bauteile gewährleistet einen erheblichen Sicherheitsvorteil bei stoßartiger Belastung (Crash-Verhalten) bei einem Unfall. Dieses Verhalten läßt sich am besten durch die Ermittlung der Schlagarbeit für ausgehärtete Verklebungen ermitteln, hierbei sind sowohl bei hohen Temperaturen bis +90 °C als auch insbesondere bei tiefen Temperaturen bis zu -40 °C ausreichend hohe Werte für die Schlagarbeit bzw. Schlagschälarbeit wünschenswert bzw. erforderlich. Dabei soll zusätzlich eine möglichst hohe Zugscherfestigkeit erzielt werden. Beide Festigkeiten müssen auf einer Vielzahl von Substraten, hauptsächlich geölten Blechen, wie z. B. Karosseriestahlbiech, nach den verschiedensten Methoden verzinktes Stahlblech, Blechen aus diversen Aluminiumlegierungen oder auch Magnesiumlegierungen sowie mit organischen Beschichtungen vom Typ "Bonazinc" oder "Granocoat" im Coil-Coating-Verfahrenbeschichteten Stahlbleche erzielt werden. Wie in den nachfolgenden Beispielen gezeigt werden wird, erfüllen die erfindungsgemäßen Klebstoffzusammensetzungen diese Anforderungen in überraschender Weise in einem sehr hohen Ausmaß.

Die nachfolgenden Beispiele sollen die Erfindung näher erläutern. Bei den Zusammensetzungen sind dabei alle Mengenangaben Gewichtsteile, wenn nicht anders angegeben.

### Beispiele

### Allgemeine Herstellung für die Komponente B)

Unter Stickstoffatmosphäre und Rühren wurden bei 140 °C ein Carboxyterminiertes Poly(butadien-co-acrylnitril) (Hycar CTBN 1300 X 13) mit einem etwa 10 molaren Überschuß eines flüssigen DGEBA-Epoxidharzes 3 Stunden lang umgesetzt bis zur Konstanz der Reaktion. (DGEBA= Diglycidylether des Bisphenols A).

### Allgemeine Herstellung für Komponente D)

1 Mol des Carbonsäureanhydrids wurden unter Stickstoffatmosphäre und Rühren mit 0,4 bis 0,7 Mol eines zweiwertigen aminoterminierten Polyalkylenglycols bei 120°C - 190°C bei 0,01 - 100 mbar für 3 bis 5 h zur Reaktion gebracht, wobei das Amin bei 130°C vorgelegt und nach Zugabe des Carbonsäureanhydrids der Druck allmählich verringert wurde. Gegebenenfalls wird das Reaktionsprodukt mit der 2 bis 4-fachen Masse eines Epoxidharzes und 0,2 bis 0,5-Gew.-% Triphenylphosphin für 30 -120 min bei 80 - 120°C umgesetzt.

### Allgemeine Herstellung für Komponente E)

1 Mol des Carbonsäureanhydrids wurden unter Stickstoffatmosphäre und Rühren mit 0,2 bis 0,5 Mol eines dreiwertigen aminoterminierten Polyalkylenglycols bei 100 - 190°C für 30 bis 180 min zur Reaktion gebracht. Gegebenenfalls wird das Reaktionsprodukt mit der 2 bis 4-fachen Masse eines Epoxidharzes und 0,2 bis 0,5-Gew.-% Triphenylphosphin für 1 - 2 Stunden bei 100°C umgesetzt bis zur Konstanz der Reaktion.

### Allgemeine Herstellung des Klebstoffs

In einem Kneter wurden bei Raumtemperatur oder ggf. bei 70°C, bis max. 80 °C alle Komponenten bis zur Homogenität gemischt und anschließend warm in Lagerbehälter abgefüllt.

### Beispiele 1-2

Gemäß der allgemeinen Herstellung für Komponente D) wurden die in Tabelle 1 aufgeführten Harze hergestellt.

**Tabelle 1**

| **Beispiel** | **1** | **2** |
|---|---|---|
| D-2000 | 1026 | 513 |
| PMSA | 224 | 112 |
| DGEBA | 0 | 1438 |
| D-2000: Jeffamine D-2000 (Huntsman) zweiwertiges aminoterminiertes Polypropylenglycol, MG 2000 | | |
| DGEBA: DGEBA-Harz, Epoxyequivalentgewicht 189 | | |

### Beispiele 3-5

Gemäß der allgemeinen Herstellung für Komponente E) wurden die in Tabelle 2 aufgeführten Harze hergestellt.

**Tabelle 2**

| **Beispiel** | **3** | **4** | **5** |
|---|---|---|---|
| T-3000 | 220 | 0 | 200 |
| T-5000 | 0 | 200 | 0 |
| PMSA | 0 | 0 | 32,2 |
| MSA | 20,1 | 0 | 0 |
| TMSA | 0 | 20,4 | 14,2 |
| DGEBA | 538 | 0 | 0 |
| Reaktionsbed. | 100°C / 30 min | 165°C *l* 3h | 160°C / 3h |
| T-3000: Jeffamine T-3000 (Huntsman), dreiwertiges aminoterminiertes Polypropylenglycol, MG 3000 | | | |
| T-5000: Jeffamine T-5000 (Huntsman), dreiwertiges aminoterminiertes Polypropylenglycol, MG 5000 | | | |
| DGEBA: DGEBA-Harz, Epoxyequivalentgewicht 189 | | | |
| Reaktionsbed.: Reaktionsbedingungen zur Umsetzung des Amins mit dem Anhydrid | | | |
| PMSA: Pyromellithsäuredianhydrid | | | |
| MSA: Maleinsäureanhydrid | | | |
| TMSA: Trimellithsäureanhydrid | | | |

Gemäß der allgemeinen Herstellung für Komponente B) wurde aus Hycar CTBN 1300 X13 und einem flüssigen DGEBA-Harz ein Produkt hergestellt mit 40% Butylkautschuk und einem Epoxyequivalentgewicht von 900, Viskosität bei 80°C 200 Pa.s.

### Beispiele 6-9

Aus den Komponenten D) gemäß Beispiel 1 bis 2, den Komponenten E) gemäß Beispiel 3 bis 5, der Komponente B) sowie einem flüssigen DGEBA-Harz (Epoxyequivalentgewicht 189, Komponente A), Dicyandiamid als Härter, Beschleunigern und hydrophober Kieselsäure als Thixotropiermittel wurden erfindungsgemäße Klebstoffzusammensetzungen gemäß der allgemeinen Herstellung des Klebstoffs hergestellt. Die Zusammensetzungen sind in Tabelle 3 zusammengefasst.

**Tabelle 3**

| **Beispiel** | **6** | **7** | **8** | **9** |
|---|---|---|---|---|
| Komponente D aus Beispiel 1 | 25,0 | 25,0 | 25,0 | 0 |
| Komponente D aus Beispiel 2 | 0 | 0 | 0 | 83,5 |
| Komponente E aus Beispiel 3 | 0 | 0 | 81,3 | 81,3 |
| Komponente E aus Beispiel 4 | 0 | 25,0 | 0 | 0 |
| Komponente E aus Beispiel 5 | 25,0 | 0 | 0 | 0 |
| Komponente B | 55,0 | 55,0 | 55,0 | 55,0 |
| DGEBA | 127,2 | 127,2 | 71,1 | 12,8 |
| Dicyandiamid | 17,5 | 17,5 | 17,5 | 17,5 |
| Fenuron | 0,25 | 0,25 | 0,25 | 0,25 |
| Kieselsäure | 10,0 | 10,0 | 10,0 | 10,0 |
| DGEBA: DGEBA-Harz, Epoxyequivalentgewicht 189 Kieselsäure: Cabosil TS 720 | | | | |

In der Tabelle 4 sind die klebetechnischen Eigenschaften der erfindungsgemäßen Beispiele und die klebetechnischen Eigenschaften von Klebstoffen gemäß Stand der Technik gegenübergestellt. Bei dem Klebstoff des Vergleichversuchs 1 handelt es sich um Terokal 5051 der Firma Henkel Teroson, dieser Klebstoff wurde auf der Basis der Lehre der EP-A-0 354 498 hergestellt. Bei dem Klebstoff des Vergleichversuches 2 handelt es sich um ein handelsübliches Produkt des Standes der Technik. Es wird angenommen, dass dieser Klebstoff auf der Basis der Lehre der EP-A-0 308 664 hergestellt wurde.

**Tabelle 4**

| **Beispiel** | **6** | **7** | **8** | **9** | **Vergl. 1** | **Vergl. 2** |
|---|---|---|---|---|---|---|
| Impact -40°C [J] | 1,5 | 9,6 | 21,1 | 21,8 | 0,5 | 3,3 |
| Impact -20°C [J] | 17,5 | 18,2 | 27,3 | 25,1 | 0,4 | 2,6 |
| Impact 0°C [J] | 14,1 | 19,1 | 25,9 | 22,3 | 0,9 | 4,4 |
| Impact 23°C [J] | 22,3 | 22,0 | 28,0 | 28,0 | 2,1 | 5,2 |
| ZSF 23°C [MPa] | 33 | 31 | 34 | 33 | 21,8 | 21,6 |
| ZSF 90°C [MPa] | 28 | 24 | 24 | 20 | 10,9 | 11,1 |
| Impact: Schlagschältest nach ISO 11343 bei 2 m/s | | | | | | |
| ZSF: Zugscherfestigkeit nach DIN 53283 | | | | | | |

Aus den in Tabelle 4 aufgeführten klebetechnischen Eigenschaften wird der Vorteil der Erfindungsgemäßen Klebstoffzusammensetzungen gemäß Beispiel 6 - 9 deutlich, wenn diese mit dem Stand der Technik gemäß Vergleichsbeispielen 1 und 2 verglichen werden. Die erfindungsgemäßen Beispiele zeigen sehr hohe Schlagschälfestigkeit nach ISO 11343 bei hohen Schlaggeschwindigkeiten insbesondere wird dies durch hohe Schlagschälarbeitswerte bei den tiefen Temperaturen von -20 °C und -40 °C deutlich. Gleichzeitig weisen diese Zusammensetzungen auch bei hohen Temperaturen von 90 °C eine hohe Zugscherfestigkeit nach DIN 53283 auf und sind in beiden Werten dem Zusammensetzung gemäß bisherigem Stand der Technik weit überlegen.

### Beispiele 10-14 und Vergleichsbeispiele 3-6

Gemäß der allgemeinen Herstellung für Komponente E) wurden die in Tabelle 5 aufgeführten Harze hergestellt.

**Tabelle 5**

| **Beispiel** | **10** | **11** | **12** | **13** | **14** |
|---|---|---|---|---|---|
| T-3000 | 220 | 0 | 200 | 0 | 220 |
| T-5000 | 0 | 200 | 0 | 200 | 0 |
| PMSA | 0 | 0 | 32,2 | 7,4 | 0 |
| MSA | 24,2 | 0 | 0 | 0 | 20,1 |
| TMSA | 0 | 20,4 | 14,2 | 12,7 | 0 |
| Reaktionsbed. | 120°C / 2h | 165°C / 3h | 160°C / 3h | 160°C / 3h | 100°C / 0,5h |
| T-3000: Jeffamine T-3000 (Huntsman), trifunktionelles Polypropylenglycol mit Aminoendgruppen, MG ca. 3000 | | | | | |
| T-5000: Jeffamine T-5000 (Huntsman), trifunktionelles Polypropylenglycol mit Aminoendgruppen, MG ca. 5000 | | | | | |
| PMSA: Pyromellithsäuredianhydrid | | | | | |
| MSA: Maleinsäureanhydrid | | | | | |
| TMSA: Trimellithsäureanhydrid | | | | | |

Gemäß der allgemeinen Herstellung für Komponente B) wurde aus Hycar CTBN 1300 X13 und einem flüssigen DGEBA-Harz ein Produkt hergestellt mit 40% Butylkautschuk und einem Epoxyequivalentgewicht von 900, Viskosität bei 80°C 200 Pa.s.

Als Vergleichsbeispiele 3-6 wurden gemäß der Lehre der EP 0 381 625 die in Tabelle 6 aufgeführten Harze auf der Basis von zweiwertigen Polyethem hergestellt:

**Tabelle 6**

| **Vergleichsbeispiele** | **3** | **4** | **5** | **6** |
|---|---|---|---|---|
| D-2000 | 297,3 | 230 | 250 | 0 |
| XTJ-523 | 0 | 0 | 0 | 200 |
| BSA | 0 | 23,3 | 0 | 0 |
| MSA | 28,6 | 0 | 0 | 19,2 |
| PSA | 0 | 0 | 37,4 | 0 |
| Reaktionsbed. | 100°C 0,5 h | 120°C 2 h | 120°C 2 h | 100°C 0,5 h |
| D-2000: Jeffamine D-2000 (Huntsman), difunktionelles aminoterminiertes Polypropylenglycol, MG ca. 2000 | | | | |
| XTJ-523: Jeffamine XTJ-523 (Huntsman), difunktionelles aminoterminiertes 1,2-Polybutylenoxid, MG 2000 | | | | |
| BSA: Bemsteinsäureanhydrid | | | | |
| MSA: Maleinsäureanhydrid | | | | |
| PSA: Phthalsäureanhydrid | | | | |

### Beispiele 15-25 und Vergleichsbeispiele 7-10

Aus den Komponenten E) gemäß Beispiel 10 bis 14, der Komponente B) sowie einem flüssigen DGEBA-Harz (Epoxyequivalentgewicht 189, Komponente A) ), Dicyandiamid als Härter, Beschleunigern und hydrophober Kieselsäure als Thixotropiermittel wurden erfindungsgemäße Klebstoffzusammensetzungen gemäß der allgemeinen Herstellung des Klebstoffs hergestellt. Die Zusammensetzungen sind in Tabelle 7 zusammengefasst.

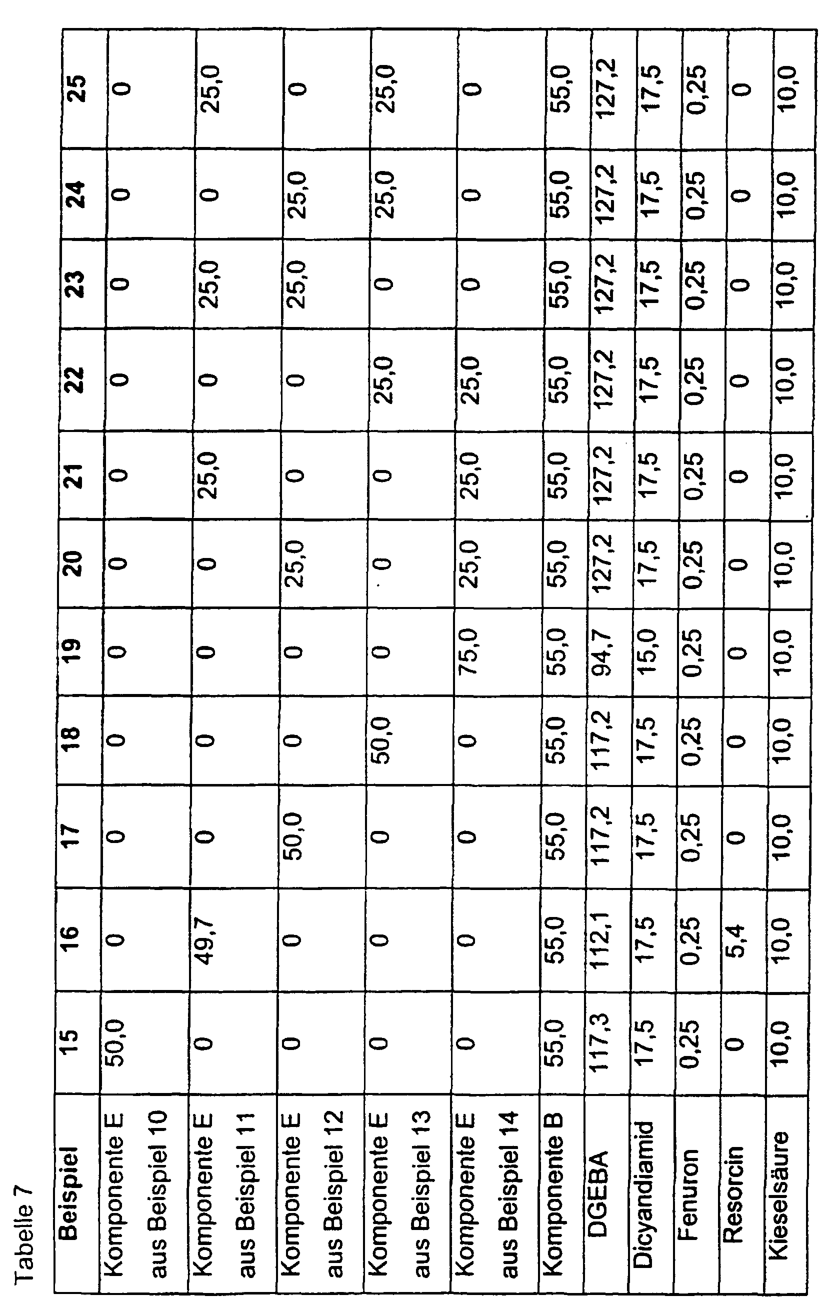

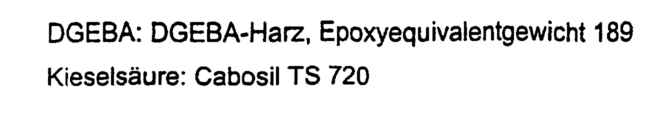

Aus den Komponenten gemäß Vergleichsbeispiel 3 bis 6, der Komponente B) sowie einem flüssigen DGEBA-Harz (Epoxyequivalentgewicht 189, Komponente A) ), Dicyandiamid als Härter, Beschleunigern und hydrophober Kieselsäure als Thixotropiermittel wurden als Vergleichsbeispiele 7 bis 10 Klebstoffzusammensetzungen gemäß der Lehre der EP 0 381 625 hergestellt. Die Zusammensetzungen sind in Tabelle 8 zusammengefasst.

**Tabelle 8**

| **Vergleichsbeispiele** | **7** | **8** | **9** | **10** |
|---|---|---|---|---|
| Harz aus Vergleichsbeispiel 3 | 50,0 | 0 | 0 | 0 |
| Harz aus Vergleichsbeispiel 4 | 0 | 50,0 | 0 | 0 |
| Harz aus Vergleichsbeispiel 5 | 0 | 0 | 50,0 | 0 |
| Harz aus Vergleichsbeispiel 6 | 0 | 0 | 0 | 50,0 |
| Komponente B | 55,0 | 55,0 | 55,0 | 55,0 |
| DGEBA | 117,2 | 117,2 | 117,2 | 117,2 |
| Dicyandiamid | 17,5 | 17,5 | 17,5 | 17,5 |
| Fenuron | 0,25 | 0,25 | 0,25 | 0,25 |
| Kieselsäure | 10,0 | 10,0 | 10,0 | 10,0 |
| DGEBA: DGEBA-Harz, Epoxyequivalentgewicht 189 | | | | |

### Kieselsäure: Cabosil TS 720

In der Tabelle 9 sind die klebetechnischen Eigenschaften der erfindungsgemäßen Beispiele 15-25 und die klebetechnischen Eigenschaften von Klebstoffen gemäß Stand der Technik (Vergleichsbeispiele 7 bis 12) gegenübergestellt. Bei den Vergleichsbeispielen 7-10 handelt es sich um Klebstoffe gemäß der Lehre der EP 0 381 625, wie in Tabelle 6 aufgeführt. Bei dem Klebstoff des Vergleichsbeispiels 11 handelt es sich um Terokal 5051 der Firma Henkel Teroson, dieser Klebstoff wurde auf der Basis der Lehre der EP-A-0 354 498 hergestellt. Bei dem Klebstoff des Vergleichsbeispiels 12 handelt es sich um ein handelsübliches Produkt des Standes der Technik (Betamate 1044/3, Fa.Gurit Essex). Es wird angenommen, dass dieser Klebstoff auf der Basis der Lehre der EP-A-0 308 664 hergestellt wurde.

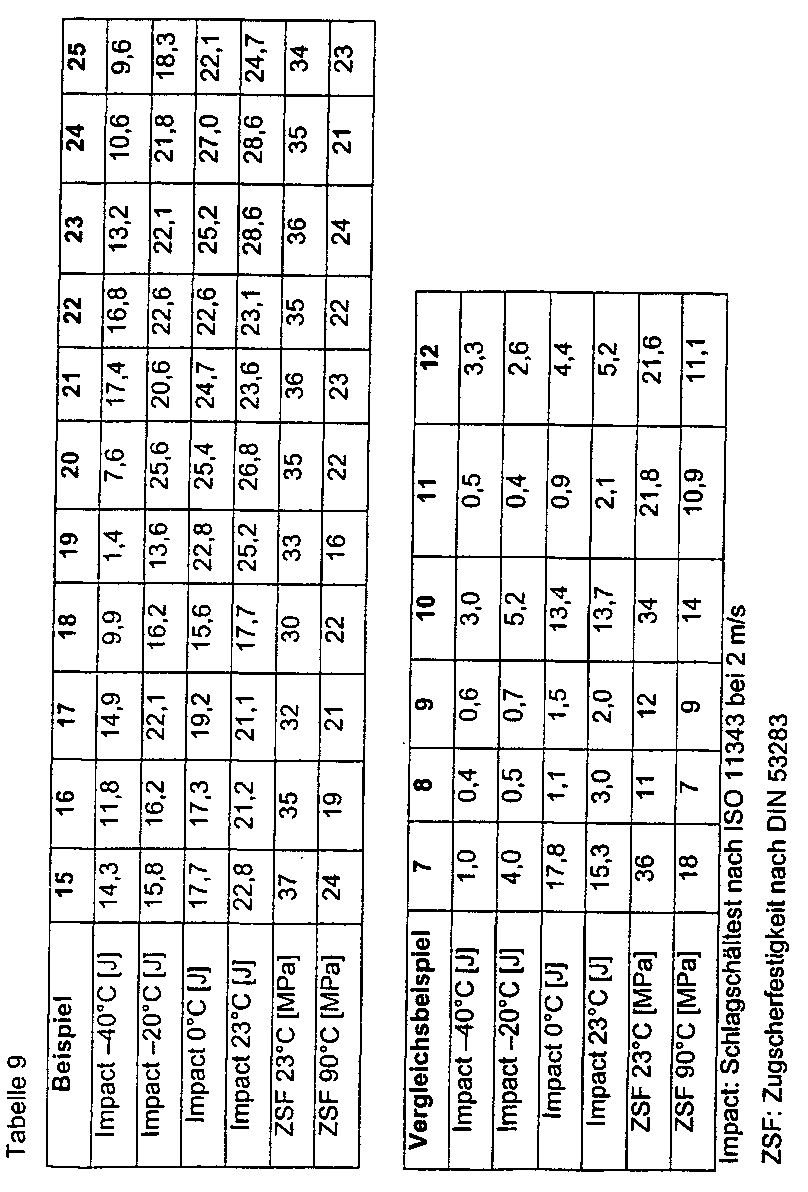

Aus den in Tabelle 9 aufgeführten klebetechnischen Eigenschaften wird der Vorteil der erfindungsgemäßen Klebstoffzusammensetzungen gemäß Beispiel 15 - 25 deutlich, wenn diese mit den Vergleichsbeispielen 7 - 12 gemäß dem Stand der Technik verglichen werden. Die erfindungsgemäßen Beispiele zeigen sehr hohe Schlagschälfestigkeit nach ISO 11343 auch bei hohen Schlaggeschwindigkeiten. Insbesondere wird dies durch hohe Schlagschälarbeitswerte bei den tiefen Temperaturen von -20 °C und - 40 °C deutlich. Gleichzeitig weisen diese Zusammensetzungen auch bei hohen Temperaturen von 90 °C eine hohe Zugscherfestigkeit nach DIN 53283 auf und sind in beiden Werten den Zusammensetzungen gemäß bisherigem Stand der Technik weit überlegen.

## Patentansprüche

1. Thermisch härtbare Zusammensetzung enthaltend
A) mindestens ein Epoxidharz mit durchschnittlich mehr als einer Epoxidgruppe pro Molekül
B) ein Copolymeres mit einer Glasübergangstemperatur von -30°C oder niedriger und gegenüber Epoxiden reaktiven Gruppen oder ein Umsetzungsprodukt dieses Copolymeren mit einem stöchiometrischen Überschuß eines Epoxidharzes gemäß A)
C) einen latenten, bei erhöhter Temperatur aktivierbaren Härter für Komponente A), und entweder
D) ein Reaktionsprodukt herstellbar aus einem difunktionellen aminoterminierten Polymer und einem Tri- oder Tetracarbonsäureanhydrid, **gekennzeichnet durch** im Mittel mehr als eine Imidgruppe und Carboxylgruppe pro Molekül, oder
E) ein Reaktionsprodukt herstellbar aus einem tri- oder mehrfunktionellen Polyol oder einem tri- oder mehrfunktionellen aminoterminierten Polymer und einem cyclischen Carbonsäureanhydrid, wobei das Reaktionsprodukt im Mittel mehr als eine Carboxylgruppe pro Molekül enthält, oder
F) eine Mischung der Reaktionsprodukte gemäß D) und E).

2. Zusammensetzungen nach Anspruch 1, **dadurch gekennzeichnet, daß** die Komponente B) ein Copolymeres auf Butadienbasis ist.

3. Zusammensetzungen nach Anspruch 2, **dadurch gekennzeichnet, daß** die Komponente B) ein carboxylgruppenhaltiges Copolymeres auf der Basis von Butadien-Acrylnitril, Butadien-(Meth)acrylsäureestern, ein Butadien-Acrylnitril-Styrol-Copolymeres, ein Butadien-(Meth)acrylat-Styrol-Copolymeres oder ein Dendrimeres ist.

4. Zusammensetzung nach Anspruch 1, **dadurch gekennzeichnet, daß** die Komponente B) ein Kern-Schale-Polymer ist, dessen Kempolymer ein Dien-Polymer oder ein (Meth)acryl-Polymer ist mit einer Glasübergangstemperatur von -30°C oder niedriger und das gegebenenfalls mit 0,01 bis 5 Gew.% eines di-olefinischen Comonomers vemetzt sein kann und dessen Schalenpolymer eine Glasübergangstemperatur von 60°C oder höher hat und das aus Monomeren aus der Gruppe Alkyl(meth)acrylat, (Meth)acrylnitril, (Methyl)-Styrol und olefinisch ungesättigten Carbonsäuren oder Carbonsäurenhydriden oder deren Mischungen aufgebaut ist.

5. Zusammensetzung nach mindestens einem der vorhergehenden Ansprüche, **dadurch gekennzeichnet, daß** die Komponente D) aus
a) einem Carbonsäureanhydrid ausgewählt aus Citronensäure-, 1,2,3-Propantricarbonsäure-, Aconitsäure-, 1,2,3- oder 1,2,4-Benzoltricarbonsäureanhydrid, Mellophansäure-, Pyromellitsäure-, 1,8:4,5-bzw. 2,3:6,7-Naphthalin-tetracarbonsäure-, Perylendianhydrid, Biphenyltetracarbonsäure-, Diphenylethertetracarbonsäure-, Diphenylmethantetracarbonsäure-, 2,2-Diphenylpropantetracarbonsäure-, Benzophenontetracarbonsäure-dianhydrid oder deren Mischungen und
b) einem Diamin ausgewählt aus Polyethylenglycol-, Polypropylenglycol-, Polyoxytetramethylen- oder Polybutadien-Diamin
durch Kondensationsreaktion hergestellt wurde, wobei das Kondensationsprodukt im Mittel mehr als eine cyclische Imidgruppe und Carboxylgruppe pro Molekül enthält.

6. Zusammensetzung nach mindestens einem der vorhergehenden Ansprüche, **dadurch gekennzeichnet, daß** die Komponente E) aus
a) einem Carbonsäureanhydrid ausgewählt aus Citronensäure-, 1,2,3-Propantricarbonsäure-, Aconitsäure-, Maleinsäure-, Bernsteinsäure-, Glutarsäure-, Adipinsäure-, Pimelinsäure-, Korksäure-, Azelainsäure- oder Sebacinsäureanhydrid oder Phthalsäure-, 1,2,3- oder 1,2,4-Benzoltricarbonsäureanhydrid, Mellophansäure-, Pyromellitsäure-, 1,8:4,5-bzw. 2,3:6,7-Naphthalin-tetracarbonsäure-, Perylendianhydrid, Biphenyltetracarbonsäure-, Diphenylethertetracarbonsäure-, Diphenylmethantetracarbonsäure-, 2,2-Diphenylpropantetracarbonsäure-, Benzophenontetracarbonsäure-dianhydrid oder deren Mischungen und
b) einem Polyamin ausgewählt aus Polyethylenglycol-, Polypropylenglycol-, Polyoxytetramethylen- oder Polybutadien-Triamin und/oder mindestens einem trifunktionellen Polyethylenglycol, Polypropylenglycol, Polyoxytetramethylenglycol oder deren Copolymeren oder OH-funktionellen Polybutadien durch Kondensationsreaktion hergestellt wurde, wobei das Kondensationsprodukt im Mittel mehr als eine Carboxylgruppe pro Molekül enthält.

7. Zusammensetzung nach Anspruch 2 bis 6, **dadurch gekennzeichnet, daß** die Komponente D) nach Anspruch 5 und/oder die Komponente E) nach Anspruch 6 in einem flüssigen Polyepoxid gelöst wurde.

8. Zusammensetzung nach Anspruch 1 bis 6, **dadurch gekennzeichnet, daß** die Komponente D) nach Anspruch 5 und/oder die Komponente E) nach Anspruch 6 mit einem stöchiometrischen Überschuß eines Polyepoxids umgesetzt wurde.

9. Zusammensetzung nach mindestens einem der vorhergehenden Ansprüche, **dadurch gekennzeichnet, daß** sie als latenten Härter C) eine Verbindung aus der Gruppe Dicyandiamid, Guanamine, Guanidine, Aminoguanidine, feste aromatische Diamine und/oder einen Härtungsbeschleuniger sowie
G) gegebenenfalls Weichmacher, Reaktionsverdünner, Rheologie-Hilfsmittel, Füllstoffe, Netzmittel und/oder Alterungsschutzmittel und/oder Stabilisatoren enthält.

10. Verfahren zum Härten der Zusammensetzungen enthaltend Komponenten A), B), C), entweder D) und/oder E) und gegebenenfalls F) und/oder G gemäß Anspruch 9 durch Erwärmen der Zusammensetzung auf Temperaturen zwischen 80°C und 210°C, vorzugsweise 120°C bis 180°C.

11. Verwendung der Zusammensetzungen gemäß Anspruch 9 als hochfester, schlagfester Strukturklebstoff im Fahrzeugbau, Flugzeugbau oder Schienenfahrzeugbau.

12. Verwendung der Zusammensetzungen gemäß Anspruch 9 als Strukturschaum zur Bildung von Innenversteifungen von Hohlräumen im Fahrzeugbau sowie zur Herstellung von versteifenden Beschichtungen für dünnwandige Bleche oder Kunststoffbauteile

13. Verwendung der Zusammensetzungen gemäß Anspruch 9 zur Herstellung von Verbundwerkstoffen, als Vergußmassen in der Elektro- bzw. Elektronikindustrie sowie als Die-Attach-Klebstoff bei der Herstellung von Leiterplatten in der Elektronikindustrie.

14. Verfahren zum Verkleben von metallischen und/oder Verbundwerkstoffen, **gekennzeichnet durch** die folgenden wesentlichen Verfahrensschritte
• Aufbringen der Klebstoffzusammensetzung gemäß Anspruch 9 auf mindestens eine der zu fügenden Substratoberflächen gegebenenfalls nach vorheriger Reinigung und/oder Oberflächenbehandlung,
• Fügen der Bauteile,
• Gegebenenfalls Vorgelieren der Klebstoffzusammensetzung,
• Aushärten der Verklebung **durch** Erwärmen der Bauteile auf Temperaturen zwischen 80°C und 210°C, vorzugsweise zwischen 120°C und 180°C.

## Claims

1. A thermally curable composition comprising:
(A) at least one epoxy resin having on average more than one epoxy group per molecule;
(B) a copolymer having a glass transition temperature of -30°C or lower and epoxy-reactive groups or a reaction product of such copolymer with a stoichiometric excess of an epoxy resin according to (A);
(C) a latent hardener activatable at elevated temperature, for component (A); and either
(D) a reaction product obtainable from a difunctional amino-terminated polymer and a tri- or tetra-carboxylic acid anhydride having on average more than one imide group and carboxyl group per molecule; or
(E) a reaction product producible from a tri- or poly-functional polyol or a tri- or poly-functional amino-terminated polymer and a cyclic carboxylic anhydride, which reaction product contains on average more than one carboxyl group per molecule, or
(F) a mixture of the reaction products according to (D) and (E)

2. A composition as claimed in claim 1 wherein component (B) is a copolymer based on butadiene.

3. A composition as claimed in claim 2 wherein component (B) is a copolymer containing carboxyl groups based on butadiene/acrylonitrile, butadiene/(meth)acrylic acid esters, a butadiene/acrylonitrile/styrene copolymer and butadiene/(meth)acrylate/styrene copolymer or a dendrimer.

4. A composition as claimed in claim 2 wherein component (B) is a core/shell polymer, the core of which is a diene polymer or a (meth)acrylic polymer having a glass transition temperature of -30°C or lower and which may optionally be crosslinked with 0.01 to 5 wt.% of a diolefinic comonomer and the shell of which has a glass transition temperature of 60°C or higher and is synthesised from monomers selected from the group consisting of alkyl (meth)acrylate, (meth)acrylonitrile, (methyl)styrene and olefinically unsaturated carboxylic acids or carboxylic anhydrides or mixtures thereof.

5. A composition as claimed in at least one of the preceding claims wherein component (D) was produced by a condensation reaction from:
(a) a carboxylic anhydride selected from citric, 1,2,3-propanetricarboxylic, aconitic, 1,2,3- or 1,2,4-benzenetricarboxylic anhydride, mellophanic, pyromellitic, 1,8:4,5- or 2,3:6,7-naphthalenetetracarboxylic, perylene dianhydride, biphenyltetracarboxylic, diphenyl ether tetracarboxylic, diphenylmethanetetracarboxylic, 2,2-diphenylpropanetetracarboxylic, benzophenonetetracarboxylic dianhydride or mixtures thereof;
and
(b) a diamine selected from polyethylene glycol diamine, polypropylene glycol diamine, polyoxytetramethylene diamine or polybutadiene diamine;
the condensation product containing on average more than one cyclic imide group and carboxyl group per molecule.

6. A composition as claimed in at least one of the preceding claims wherein component (E) was produced from:
(a) a carboxylic anhydride selected from citric, 1,2,3-propanetricarboxylic, aconitic, maleic, succinic, glutaric, adipic, pimelic, suberic, azelaic or sebacic anhydride or phthalic, 1,2,3- or 1,2,4-benzenetricarboxylic anhydride, mellophanic, pyromellitic, 1,8:4,5- or 2,3:6,7-naphthalenetetracarboxylic, perylene dianhydride, biphenyltetracarboxylic, diphenyl ether tetracarboxylic, diphenylmethanetetracarboxylic, 2,2-diphenylpropanetetracarboxylic, benzophenonetetracarboxylic dianhydride or the mixtures thereof;
and
(b) a polyamine selected from polyethylene glycol triamine, polypropylene glycol triamine, polyoxytetramethylene triamine or polybutadiene triamine and/or at least one trifunctional polyethylene glycol, polypropylene glycol, polyoxytetramethylene glycol or the copolymers thereof or OH-functional polybutadiene;
the reaction product containing on average more than one carboxyl group per molecule.

7. A composition as claimed in claims 2 to 6 wherein component (D) according to claim 5 and/or component (E) according to claim 6 were/was dissolved in a liquid polyepoxide.

8. A composition as claimed in claims 1 to 6 wherein component (D) according to claim 5 and/or component (E) according to claim 6 were/was reacted with a stoichiometric excess of a polyepoxide.

9. A composition as claimed in at least one of the preceding claims wherein it contains as latent hardener (C) a compound selected from the group consisting of dicyandiamide, guanamines, guanidines, aminoguanidines, solid aromatic diamines and/or a curing accelerator optionally together with (G) plasticisers, reactive dilutents, rheology auxiliaries, fillers, wetting agents and/or antioxidants and/or stabilisers.

10. A process for curing compositions containing components (A), (B), (C), either (D) and / or (E) and optionally (F) and / or (G) according to claim 9 by heating the composition to temperatures of between 80 and 210°C, preferably 120 to 180°C.

11. Use of the composition as claimed in claim 9 as a high-strength, impact-resistant structural adhesive in vehicle construction, aircraft construction or rail vehicle construction.

12. Use of the composition as claimed in claim 8 as a structural foam for providing internal stiffening in cavities in vehicle construction and for stiffening coatings for thin sheet metal or plastics components.

13. Use of the composition as claimed in claim 9 for the production of composite materials, as embedding compositions in the electrical or electronics industry and as a die-attach adhesive in the production of printed circuit boards in the electronics industry.

14. A process for adhesive bonding of metallic and/or composite materials **characterised by** the following process steps:
• application of the adhesive composition as claimed in claim 9 to at least one of the substrate surfaces to be joined, optionally after prior cleaning and/or surface treatment
• joining of the components
• optionally, pregelation of the adhesive composition
• curing of the adhesive bond by heating the components to temperatures of between 80°C and 210°C, preferably between 120 and 180°C.

## Revendications

1. Composition thermodurcissable contenant
A) au moins une résine époxyde comprenant en moyenne plus d'un groupe époxyde par molécule ;
B) un copolymère dont la température de transition vitreuse s'élève à -30 °C ou moins et comprenant des groupes réactifs vis-à-vis d'époxydes ou bien un produit réactionnel de ce copolymère avec un excès stoechiométrique d'une résine époxyde selon A) ;
C) un durcisseur latent, activable à température élevée, pour le composant A) ; et soit
D) un produit réactionnel qui peut être préparé à partir d'un polymère difonctionnel à extrémités terminales amino et à partir d'un anhydride d'acide tricarboxylique ou tétracarboxylique, **caractérisé par**, en moyenne, plus d'un groupe imide et plus d'un groupe carboxyle par molécule ; soit
E) un produit réactionnel qui peut être préparé à partir d'un polyol trifonctionnel ou polyfonctionnel ou à partir d'un polymère trifonctionnel ou polyfonctionnel à extrémités terminales amino et à partir d'un anhydride cyclique d'acide carboxylique, le produit réactionnel contenant en moyenne plus d'un groupe carboxyle par molécule ; soit
F) un mélange des produits réactionnels selon D) et E).

2. Compositions selon la revendication 1, **caractérisées en ce que** le composant B) est un copolymère à base de butadiène.

3. Compositions selon la revendication 2, **caractérisées en ce que** le composant B) est un copolymère contenant un ou plusieurs groupes carboxyle, à base de butadiène-acrylonitrile, de butadiène-esters d'acide (méth)acrylique, un copolymère de butadiène-acrylonitrile-styrène, un copolymère de butadiène-(méth)acrylate-styrène ou un dendrimère.

4. Composition selon la revendication 1, **caractérisée en ce que** le composant B) est un polymère du type à noyau-enveloppe, dont le polymère constituant le noyau est un polymère diénique ou un polymère (méth)acrylique dont la température de transition vitreuse s'élève à -30 °C ou moins et qui, le cas échéant, peut être réticulé avec un comonomère dioléfinique à concurrence de 0,01 à 5 % en poids, et dont le polymère constituant l'enveloppe possède une température de transition vitreuse de 60 °C ou plus, et qui est constitué par des monomères choisis parmi le groupe comprenant des (méth)acrylates d'alkyle, le (méth)acrylonitrile, le (méthyl)styrène et des acides carboxyliques ou des anhydrides d'acides carboxyliques à insaturation oléfinique, ou encore leurs mélanges.

5. Composition selon au moins une des revendications précédentes, **caractérisée en ce que** le composant D) est préparé via une réaction de condensation à partir
a) d'un anhydride d'acide carboxylique choisi parmi le groupe comprenant l'anhydride de l'acide citrique, l'anhydride de l'acide 1,2,3-propanetricarboxylique, l'anhydride de l'acide aconitique, l'anhydride de l'acide 1,2,3- ou 1,2,4-benzène-tricarboxylique, le dianhydride de l'acide mellophanique, le dianhydride de l'acide pyromellitique, le dianhydride de l'acide 1,8:4,5-, respectivement 2,3:6,7-naphtalènetétracarboxylique, le dianhydride de pérylène, le dianhydride de l'acide biphényl-tétracarboxylique, le dianhydride de l'acide diphényléthertétra-carboxylique, le dianhydride de l'acide diphénylméthanetétra-carboxylique, le dianhydride de l'acide 2,2-diphénylpropanetétracarboxylique, le dianhydride de l'acide benzophénonetétra-carboxylique ou de leurs mélanges, et
b) d'une diamine choisie parmi le groupe comprenant la polyéthylèneglycol-diamine, la polypropylèneglycol-diamine, la polyoxytétraméthylène-diamine ou la polybutadiène-diamine, le produit de condensation contenant en moyenne plus d'un groupe imide cyclique et plus d'un groupe carboxyle par molécule.

6. Composition selon au moins une des revendications précédentes, **caractérisée en ce que** le composant E) est préparé via une réaction de condensation à partir
a) d'un anhydride d'acide carboxylique choisi parmi le groupe comprenant l'anhydride de l'acide citrique, l'anhydride de l'acide 1,2,3-propanetricarboxylique, l'anhydride de l'acide aconitique, l'anhydride de l'acide maléique, l'anhydride de l'acide succinique, l'anhydride de l'acide glutarique, l'anhydride de l'acide adipique, l'anhydride de l'acide pimélique, l'anhydride de l'acide subérique, l'anhydride de l'acide azélaïque ou l'anhydride de l'acide sébacique ou l'anhydride de l'acide phtalique, l'anhydride de l'acide 1,2,3- ou 1,2,4-benzène-tricarboxylique, le dianhydride de l'acide mellophanique, le dianhydride de l'acide pyromellitique, le dianhydride de l'acide 1,8:4,5-, respectivement 2,3:6,7-naphtalènetétracarboxylique, le dianhydride de pérylène, le dianhydride de l'acide biphényl-tétracarboxylique, le dianhydride de l'acide diphényléthertétra-carboxylique, le dianhydride de l'acide diphénylméthanetétra-carboxylique, le dianhydride de l'acide 2,2-diphénylpropane-tétracarboxylique, le dianhydride de l'acide benzophénonetétra-carboxylique ou de leurs mélanges, et
b) d'une polyamine choisie parmi le groupe comprenant la polyéthylèneglycol-triamine, la polypropylèneglycol-triamine, la polyoxytétraméthylène-triamine ou la polybutadiène-triamine et/ou au moins un polyéthyléneglycol, un polypropylèneglycol, un polyoxytétraméthylèneglycol trifonctionnel ou leurs copolymères ou à partir de polybutadiène OH-fonctionnel, le produit de condensation contenant en moyenne plus d'un groupe carboxyle par molécule.

7. Composition selon les revendications 2 à 6, **caractérisée en ce que** le composant D) selon la revendication 5 et/ou le composant E) selon la revendication 6, sont dissous dans un polyépoxyde liquide.

8. Composition selon les revendications 1 à 6, **caractérisée en ce que** le composant D) selon la revendication 5 et/ou le composant E) selon la revendication 6, sont mis à réagir avec un excès stoechiométrique d'un polyépoxyde.

9. Composition selon au moins une des revendications précédentes, **caractérisée en ce qu'**elle contient, à titre de durcisseur latent C), un composé choisi parmi le groupe comprenant le dicyandiamide, des guanamines, des guanidines, des aminoguanidines, des diamines aromatiques solides et/ou un accélérateur du durcissement, ainsi que G) le cas échéant, des plastifiants, des diluants réactionnels, des adjuvants rhéologiques, des matières de charge, des agents mouillants et/ou des agents de protection contre le vieillissement et/ou des stabilisateurs.

10. Procédé pour le durcissement des compositions contenant les composants A), B), C), soit D) et/ou E) et, le cas échéant, F) et/ou G) selon la revendication 9, par chauffage de la composition à des températures entre 80 °C et 210 °C, de préférence de 120 °C à 180 °C.

11. Utilisation des compositions selon la revendication 9, à titre d'adhésif de structure à haute résistance et résistant aux chocs, dans la construction automobile, la construction aéronautique ou la construction de véhicules ferroviaires.

12. Utilisation des compositions selon la revendication 9, à titre de mousse de structure pour la formation de rigidifications internes d'espace creux dans la construction automobile, ainsi que pour la préparation d'enductions ayant un effet de rigidification pour des tôles à parois minces ou pour des éléments de construction en matières synthétiques.

13. Utilisation des compositions selon la revendication 9, pour la préparation de matériaux composites, à titre de matières de scellement dans l'industrie électrique, respectivement dans l'industrie électronique, et sous forme d'adhésif de type « die-attach » dans la fabrication de plaquettes de circuits imprimés dans l'industrie électronique.

14. Procédé pour le collage de matériaux métalliques et/ou de matériaux composites, **caractérisé par** les étapes opératoires essentielles ci-après :
• l'application de la composition d'adhésif selon la revendication 9 sur au moins une des surfaces de substrat à joindre, le cas échéant après un nettoyage préalable et/ou un traitement superficiel préalable;
• le jointement des éléments de construction ;
• le cas échéant, la gélification préalable de la composition d'adhésif ;
• le durcissement du collage par chauffage des éléments de construction à des températures entre 80 °C et 210 °C, de préférence entre 120 °C et 180 °C.
